(19) Europäisches Patentamt / European Patent Office / Office européen des brevets

(11) **EP 3 552 841 B1**

## (12) EUROPEAN PATENT SPECIFICATION

(45) Date of publication and mention
of the grant of the patent:
**14.04.2021 Bulletin 2021/15**

(21) Application number: **17877880.9**

(22) Date of filing: **08.12.2017**

(51) Int Cl.:
*B60C 9/00* *(2006.01)*          *B60C 13/00* *(2006.01)*
*B60C 15/06* *(2006.01)*          *D02G 3/48* *(2006.01)*
*B60C 9/04* *(2006.01)*

(86) International application number:
**PCT/JP2017/044131**

(87) International publication number:
**WO 2018/105717 (14.06.2018 Gazette 2018/24)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2016 JP 2016239096**

(43) Date of publication of application:
**16.10.2019 Bulletin 2019/42**

(73) Proprietor: **The Yokohama Rubber Co., Ltd.
Minato-ku
Tokyo 105-8685 (JP)**

(72) Inventor: **TAKENAKA Yuichi
Hiratsuka-shi
Kanagawa 254-8601 (JP)**

(74) Representative: **Dilg, Haeusler, Schindelmann
Patentanwaltsgesellschaft mbH
Leonrodstraße 58
80636 München (DE)**

(56) References cited:
EP-A1- 2 810 791          EP-A2- 2 912 218
WO-A1-2009/063913    WO-A1-2014/057082
WO-A1-2016/190299    JP-A- S6 045 401
JP-A- S6 171 204          JP-A- S63 159 543
JP-A- 2013 001 206       JP-A- 2016 500 769

## Description

Technical Field

The present invention relates to pneumatic tires in which composite cords made of a polyethylene terephthalate fiber yarn and an aromatic polyamide fiber yarn are used for a carcass layer, and particularly relates to a pneumatic tire that can achieve a reduction in weight while maintaining good durability and steering stability.

Background Art

Pneumatic tires typically include a carcass layer mounted between a pair of bead portions. Rayon cords are preferably used as the carcass cords constituting such a carcass layer, particularly in high performance tires.
Meanwhile, a reduction in weight of pneumatic tires has been demanded in recent years in view of reducing environmental impact. As a solution, it has been proposed to reduce the tire weight by thinning the carcass layer by replacing the rayon cord with a polyester fiber cord having a higher strength. However, with polyester fiber cords used in the carcass layer, there arises a problem in that the initial elastic modulus of the cords decreases due to tire temperature rising when traveling at high speed, and steering stability deteriorates.
On the other hand, it has been proposed to use composite cords in which a polyester fiber yarn and an aromatic polyamide fiber yarn are twisted together as a carcass cord (see, for example, Patent Documents 1 and 2). In such a composite cord, the aromatic polyamide fiber yarn greatly contributes to improving the steering stability and it is possible to ensure a good durability by combining the polyester yarn with the aromatic polyamide fiber yarn.
However, in a case where the composite cord of the polyester fiber yarn and the aromatic polyamide fiber yarn are made to have a lower fineness in order to reduce the weight of the pneumatic tire, it is difficult to favorably maintain the steering stability and durability of the pneumatic tire. It is thus demanded to further improve the carcass cords.

Citation List

Patent Literature

Patent Document 1: WO 2009/63913
Patent Document 2: JP 2012-30737 A

Document WO 2014/057082 A1 shows a tire with a carcass layer comprising composite cords made of a PET fiber yarn and an aromatic polyamide fiber both with a fineness falling within the respective ranges of the present application.

Summary of Invention

Technical Problem

An object of the present invention is to provide a pneumatic tire that can achieve a reduction in weight while maintaining good durability and steering stability when using composite cords made of a polyethylene terephthalate fiber yarn and an aromatic polyamide fiber yarn for a carcass layer.

Solution to Problem

A pneumatic tire, according to the present invention provided for achieving the foregoing object, is defined in claim 1.

Advantageous Effects of Invention

The inventor has conceived of the present invention through finding out that good durability and good steering stability are maintained, for obtaining composite cords with a lower fineness that are made of a polyethylene terephthalate fiber yarn and an aromatic polyamide fiber yarn, by optimizing the intermediate elongation with a load of 2.0 cN, the dimensional stability index which is the sum of the dry heat shrinkage rate at 150°C and the intermediate elongation with a load of 2.0 cN, and the ratio of an initial elastic modulus M1 at 100°C within a load range from 0 N to 44 N with respect to an initial elastic modulus M0 at 25°C within a load range from 0 N to 44 N.

In other words, according to the present invention, the carcass layer includes, as carcass cords, a plurality of composite cords that are made of a polyethylene terephthalate fiber yarn having a fineness from 420 dtex to 1200 dtex and an aromatic polyamide fiber yarn having a fineness from 520 dtex to 1200 dtex, and have a total fineness from 940 dtex to 2400 dtex, and a twist coefficient K that falls within a range from 1600 to 2400, and the composite cords have an intermediate elongation within a range from 2.0% to 4.5% with a load of 2.0 cN, have a dimensional stability index from 2.5% to 6.0% which is a sum of a dry heat shrinkage rate at 150°C and an intermediate elongation with a load of 2.0 cN, and have a ratio of an initial elastic modulus M1 at 100°C within a load range of from 0 N to 44 N with respect to an initial elastic modulus M0 at 25°C within a load range of from 0 N to 44 N, the ratio being within a range from 76% to 94%. A reduction in weight of the pneumatic tire can be thus achieved while maintaining good durability and good steering stability.

The pneumatic tire according to the present invention preferably includes a bead core embedded in a pair of bead portions and a bead filler disposed on an outer circumference of the bead core, and the bead filler preferably has a height less than or equal to 30 mm. By reducing the height of the bead filler in such a manner, tire temperature rising caused by deformation of the bead portions is suppressed. It is thus possible to effectively improve the load durability.

Additionally, a rubber gauge taken in a portion located further outward than the carcass cords at a tire maximum width position preferably falls within a range from 1.0 mm to 2.5 mm. It is thus possible to achieve a further reduction in weight of the pneumatic tire while ensuring the resistance to damage of the carcass layer.

According to the present invention, the intermediate elongation with a load of 2.0 cN is the elongation ratio (%) of a sample cord measured where a tensile test is performed, compliant with the "Testing Methods for Chemical Fiber Tire Cords" of JIS-L1017, under conditions of a grip spacing of 250 mm and a test speed of 300 $\pm$ 20 mm/minutes with an application of load of 2.0 cN/dtex. In addition, the dry heat shrinkage rate at 150°C is the dry heat shrinkage rate (%) of the sample cord measured under conditions that, compliant with the "Testing Methods for Chemical Fiber Tire Cords" of JIS-L1017, a sample length is set at 500 mm and heating condition is set at 150°C for 30 minutes. The dimensional stability index is the sum of the intermediate elongation with a load of 2.0 cN and the dry heat shrinkage rate at 150°C, where it is meant that the dimensional stability is higher when the sum is smaller.

Furthermore, in the present invention, the initial elastic modulus M0 or M1 is the initial elastic modulus (cN/dtex) in a load range of from 0 N to 44 N where a tensile test is performed, compliant with the "Testing Methods for Chemical Fiber Tire Cords" of JIS-L1017, under the conditions of a grip spacing of 250 mm and a test speed of 300 $\pm$ 20 mm/minutes. It is meant that a reduction in elastic modulus due to tire temperature rising is smaller where the ratio of the initial elastic modulus M1 to the initial elastic modulus M0 is higher.

Brief Description of Drawings

FIG. 1 is a meridian cross-sectional view illustrating a pneumatic tire according to an embodiment of the present invention.

FIG. 2 is a cross-sectional view illustrating a composite cord used for a carcass layer of the pneumatic tire according to an embodiment of the present invention.

Description of Embodiments

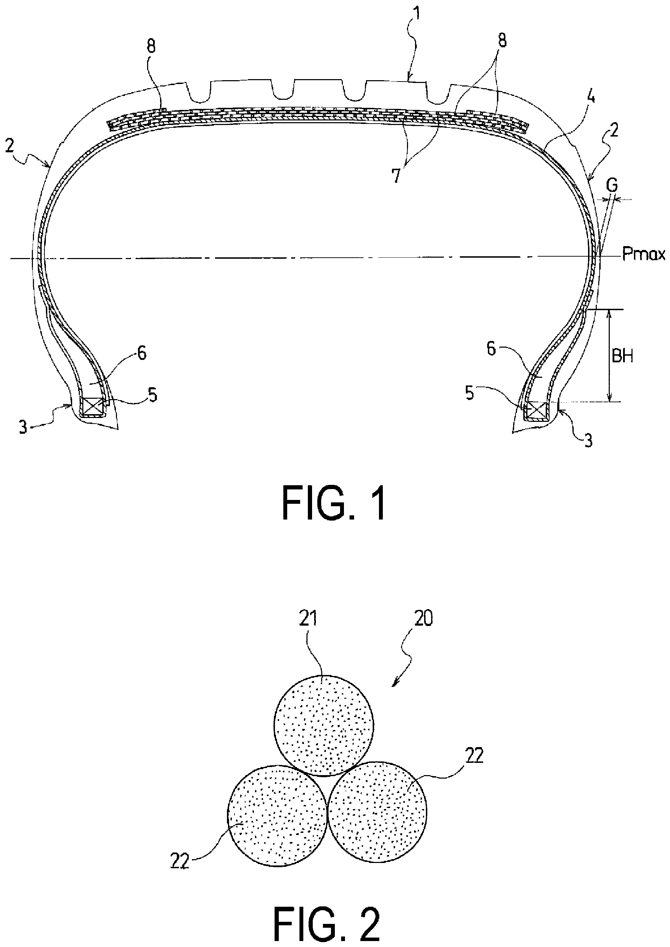

Configurations of embodiments of the present invention are described in detail below with reference to the accompanying drawings. FIG. 1 illustrates a pneumatic tire according to an embodiment of the present invention. FIG. 2 illustrates a composite cord used for a carcass layer of the pneumatic tire.

As illustrated in FIG. 1, the pneumatic tire of the present embodiment includes an annular tread portion 1 extending in the tire circumferential direction, a pair of sidewall portions 2 disposed on both sides of the tread portion 1, and a pair of bead portions 3 disposed inward of the sidewall portions 2 in the tire radial direction.

A carcass layer 4 including a plurality of carcass cords extending in the tire radial direction are mounted between the pair of bead portions 3 and 3. An annular bead core 5 is embedded within each of the bead portions 3, and a bead filler 6 made of a rubber composition and having a triangular cross-sectional shape is disposed on the outer circumference of the bead core 5.

Meanwhile, a plurality of belt layers 7 are embedded on the outer peripheral side of the carcass layer 4 of the tread portion 1 on the entire circumference of the tire. The belt layers 7 each include a plurality of reinforcing cords that are inclined with respect to the tire circumferential direction, and the reinforcing cords are disposed such that those located in adjacent ones of the layers intersect with each other. In the belt layers 7, the inclination angle of the reinforcing cords with respect to the tire circumferential direction ranges from, for example, 10° to 40°. Steel cords are preferably used as the reinforcing cords of the belt layers 7.

In order to improve the high-speed durability, at least one belt reinforcing layer 8 is disposed on the outer circumferential side of the belt layers 7, which is formed by placing reinforcing cords at an angle of less than or equal to 5° with respect to the tire circumferential direction. The belt reinforcing layer 8 preferably has a jointless structure in which a strip material made of at least one reinforcing cord laid out and covered with rubber is wound continuously in the tire circumferential direction. Organic fiber cords those made of, for example, Nylon or aramid, are preferably used as the reinforcing cords of the belt reinforcing layer 8.

In the pneumatic tire described above, a composite cord 20 such as one illustrated in FIG. 2 is used as a carcass cord constituting the carcass layer 4. The composite cord 20 has a structure in which at least one ply 21 made of a polyethylene terephthalate fiber yarn and at least one ply 22 made of an aromatic polyamide fiber yarn are intertwined together. In particular, the composite cord 20 preferably has a structure in which three plies are twisted, and a polyethylene terephthalate fiber yarn constitutes one ply 21, and aromatic polyamide fiber yarns constitute two plies 22. Each of the plies 21 and 22 is twisted in one direction, and the composite cord 20 is twisted in the direction opposite to the direction in which the plies 21 and 22 are twisted.

The fineness of the polyethylene terephthalate fiber yarn constituting the composite cord 20 is set within a range from 420 dtex to 1200 dtex. The fineness of the aromatic polyamide fiber yarn constituting the composite cord 20 is set within a range from 520 dtex to 1200 dtex. The total fineness of the composite cord 20 is set within a range from 940 dtex to 2400 dtex. By selecting such finenesses, it is possible to reduce the fineness of the composite cord 20 so as to achieve a reduction in weight of the tire, and to maintain good durability and good steering stability of the tire. Here, when the fineness of the polyethylene terephthalate fiber yarn is less than 420 dtex, fatigue resistance will decline and durability will be insufficient. In contrast, when the fineness is more than 1200 dtex, steering stability will be insufficient. When the fineness of the aromatic polyamide fiber yarn is less than 520 dtex, steering stability will be insufficient. In contrast, when the fineness of the aromatic polyamide fiber yarn is more than 1200 dtex, fatigue resistance will decline and durability will be insufficient. In the composite cord 20, it is desirable that the fineness of the aromatic polyamide fiber yarn be more than the fineness of the polyethylene terephthalate fiber yarn. For example, the fineness of the aromatic polyamide fiber yarn is preferably from 1.3 times to 2.0 times the fineness of the polyethylene terephthalate fiber yarn.

In the composite cord 20, the twist coefficient K represented by Equation (1) below is set within a range from 1600 to 2400.

$$K = T\sqrt{D}\ldots (1),$$

where

  T: cable twist count (twists/10 cm)
  D: cord total fineness (dtex)

By selecting such twist coefficient K, sufficient fatigue resistance and steering stability can be ensured. Here, when the twist coefficient K is less than 1600, the fatigue resistance will decline, and the load durability will be negatively affected. In contrast, when the twist coefficient K is more than 2400, the rigidity will decline and the steering stability will be insufficient. It is acceptable as long as the cable twist count of the composite cord 20 is from 53 times/10 cm to 63 times/10 cm.

The composite cord 20 has an intermediate elongation with a load of 2.0 cN set within a range from 2.0% to 4.5%, and has a dimensional stability index set within a range from 2.5% to 6.0%, the dimensional stability index being a sum of the dry heat shrinkage rate at 150°C and the intermediate elongation with a load of 2.0 cN. By setting the intermediate elongation and the dimensional stability index within the above-mentioned ranges, sufficient steering stability can be ensured. Here, when the intermediate elongation or the dimensional stability index is more than the upper limit value, the steering stability will be insufficient.

In addition, the composite cord 20 has a ratio of the initial elastic modulus M1 at 100°C within the load range of from 0 N to 44 N with respect to the initial elastic modulus at 25°C within the load range of from 0 N to 44 N, the ratio (M1/M0×100%) being set within the range from 76% to 94%. By satisfying this ratio, good steering stability can be maintained at high speed. Here, when the ratio of the initial elastic modulus M1 at 100°C within the load range of from 0 N to 44 N with respect to the initial elastic modulus M0 at 25°C within the load range of from 0 N to 44 N is less than 76%, the steering stability will be negatively affected due to tire temperature rising at high speed, as is the case with polyethylene terephthalate fiber cords. In addition, in a case where the composite cord 20 is formed of an aromatic polyamide fiber yarn and a polyethylene terephthalate fiber yarn, it is difficult that the above-mentioned ratio exceeds 94%.

In the above-described pneumatic tire, the composite cord 20 is used, as carcass cords of the carcass layer 4, which is composed of a polyethylene terephthalate fiber yarn having a specific fineness and an aromatic polyamide fiber yarn having a specific fineness, and having a specific twist coefficient K, and the composite cord 20 has the intermediate elongation with a load of 2.0 cN, the dimensional stability index which is a sum of the dry heat shrinkage rate at 150°C and the intermediate elongation with a load of 2.0 cN, and the ratio of the initial elastic modulus M1 at 100°C within the load range of from 0 N to 44 N with respect to the initial elastic modulus M0 at 25°C within the load range of from 0 N to 44 N, wherein these values are each defined within a specific range. A reduction in weight of the pneumatic tire can be thus achieved while maintaining good durability and good steering stability.

In the above-described pneumatic tire, as illustrated in FIG.1, the bead filler 6 preferably has a height BH of less than or equal to 30 mm. The height BH of the bead filler 6 is measured along the tire radial direction. By reducing the height BH of the bead filler 6 in such a manner, tire temperature rising caused by deformation of the bead portion 3 is suppressed, and it is thus possible to effectively improve the load durability. Here, when the height BH of the bead filler 6 is greater than 30 mm, the effect of suppressing tire temperature rising is reduced. The height BH of the bead filler 6 is preferably more than or equal to 5 mm.

Additionally, the rubber gauge G, taken in a portion located further outward than the carcass cords of the carcass layer 4 at the tire maximum width position Pmax, is preferably set within a range from 1.0 mm to 2.5 mm. A reduction in weight of the pneumatic tire can be thus promoted while ensuring damage resistance of the carcass layer 4. Here, when the rubber gauge G is less than 1.0 mm, the carcass cords of the carcass layer 4 may be exposed due to wear caused by rubbing of a lateral surface of the tire. In contrast, when the rubber gauge G is more than 2.5 mm, the effect of reducing the tire mass is lowered.

Although the foregoing embodiment describes the embodiment in which one carcass layer 4 is mounted between a pair of bead portions 3 and 3, the present invention can be applied to a pneumatic tire including at least one carcass layer. Accordingly, it is possible that a plurality of the carcass layers are mounted between a pair of the bead portions, depending on required tire rigidity, and that predetermined composite cords are applied as the carcass cords of each of the carcass layers.

Examples

Pneumatic tires of Conventional Example, Comparative Examples 1 to 6, and Examples 1 to 8 were fabricated, each having a tire size of 255/45R18 and including a single carcass layer mounted between a pair of bead portions, wherein the properties of the carcass cords that constitute the carcass layer, the bead filler height BH, and the rubber gauge G taken in a portion located further outward than the carcass cords at the tire maximum width position were defined as shown in Table 1 and Table 2.

In Conventional Example, a rayon cord formed of three plies of rayon fiber yarns twisted was used as the carcass cord. In the Comparative Examples 1 and 2, a PET cord formed of two plies made of polyethylene terephthalate fiber yarns twisted was used as the carcass cord. In Comparative Example 3, a PET cord formed of one twisted polyethylene terephthalate fiber yarn was used as the carcass cord. Meanwhile, in the Comparative Examples 4 to 6 and the Examples 1 to 8, a composite cord (PET and aramid) formed by twisting one ply made of polyethylene terephthalate fiber yarns and two plies made of aromatic polyamide fiber yarns was used as the carcass cord.

For the foregoing test tires, the tire mass, rolling resistance, steering stability, and load durability were evaluated according to evaluation methods below. Results are shown in Table 1 and Table 2 together.

Tire Mass:

The mass of each of the test tires was measured. Evaluation results are expressed as index values with the value of Conventional Example being defined as 100. Smaller index values indicate lighter tire weight.

Rolling Resistance:

Each of the test tires was assembled on a wheel having a rim size of 20x9J and mounted on a rolling resistance measuring device, and rolling resistance at a velocity of 80 km/h was measured with an air pressure of 220 kPa and a load of 5.0 kN. Evaluation results are expressed as index values with the value of Conventional Example being defined as 100. Smaller index values indicate less rolling resistance.

Steering Stability:

Each of the test tires was assembled on a wheel with a rim size of 20x9J and mounted on a test vehicle with an air pressure of 220 kPa, and a feeling evaluation was conducted on steering stability at high speed by a test driver in a test course. The results were evaluated on a scale of one to five with Conventional Example as a reference value (3.0). Larger evaluation values indicate superior steering stability.

Load Durability:

Each of the test tires was assembled on a wheel having a rim size of 20x9J with an air pressure of 220 kPa, and a drum testing machine having a drum made of steel with a smooth surface and having a diameter of 1707 mm was used, compliant with testing for durability performance of JIS-D4230, a running distance was measured until the tire was broken where the ambient temperature was controlled at 38 ± 3°C, and the traveling speed was 81 km/h, while increasing the load every four hours by 15% of the maximum load from 85% of the maximum load specified by the JATMA. Note that the final load was 280% of the maximum load, and traveling was continued until breakage occurred under the load conditions. Evaluation results are expressed as index values with the value of Conventional Example being defined as 100. Larger index values indicate superior load durability.

[Table 1]

| | Conventional Example | Comparative Example 1 | Comparative Example 2 | Comparative Example 3 | Example 1 | Example 2 | Example 3 | Comparative Example 4 |
|---|---|---|---|---|---|---|---|---|
| Carcass cord material | Rayon | PET | PET | PET | PET + aramid | PET + aramid | PET + aramid | PET + aramid |
| Cord structure (dtex) | 1840T/ 3 | 1670T/ 2 | 1670T/ 2 | 1440T/ 1 | 560T/1 +440T/ 2 | 560T/1 +440T/ 2 | 560T/1 +440T/ 2 | 560T/1 +440T/ 2 |
| Cord total fineness (dtex) | 5520 | 3340 | 3340 | 1440 | 1440 | 1440 | 1440 | 1440 |
| Strength (cN/dtex) | 4.7 | 5.2 | 5.2 | 5.2 | 11.5 | 11.5 | 11.5 | 11.5 |
| Intermediate elongation (%) | 3.0 | 5.0 | 4.0 | 5.0 | 2.0 | 3.0 | 4.5 | 5.0 |
| Dimensional stability index (%) | 4.3 | 7.5 | 7.5 | 7.5 | 2.5 | 4.0 | 6.0 | 6.5 |
| M1/M0×100 % | 85 | 75 | 75 | 75 | 88 | 86 | 78 | 75 |
| Twist coefficient K | 2900 | 2200 | 2200 | 2200 | 1800 | 2200 | 2400 | 2800 |
| Bead filler height BH (mm) | 35 | 35 | 35 | 35 | 35 | 35 | 35 | 35 |
| Rubber gauge G (mm) | 3 | 3 | 3 | 3 | 3 | 3 | 3 | 3 |
| Tire mass | 100 | 99 | 99 | 98 | 97 | 97 | 97 | 97 |
| Rolling resistance | 100 | 103 | 103 | 101 | 98 | 98 | 98 | 98 |
| Steering stability | 3.0 | 2.5 | 2.5 | 2.5 | 3.0+ | 3.0 | 3.0 | 2.5 |
| Load durability | 100 | 95 | 95 | 96 | 100 | 100 | 102 | 104 |

[Table 2]

| | Comparative Example 5 | Example 4 | Example 5 | Example 6 | Comparative Example 6 | Example 7 | Example 8 |
|---|---|---|---|---|---|---|---|
| Carcass cord material | PET + aramid | PET + aramid | PET + aramid | PET + aramid | PET + aramid | PET + aramid | PET + aramid |
| Cord structure (dtex) | 560T/1 +440T/ 2 | 560T/1 +440T/ 2 | 560T/1 +440T/ 2 | 560T/1 +440T/ 2 | 560T/1 +440T/ 2 | 560T/1 +440T/ 2 | 560T/1 +440T/ 2 |
| Cord total fineness (dtex) | 1440 | 1440 | 1440 | 1440 | 1440 | 1440 | 1440 |
| Strength (cN/ dtex) | 11.5 | 11.5 | 11.5 | 11.5 | 11.5 | 11.5 | 11.5 |
| Intermediate elongation (%) | 1.6 | 2.0 | 3.0 | 3.5 | 4.0 | 3.0 | 3.0 |
| Dimensional stability index (%) | 2.5 | 3.5 | 4.0 | 4.5 | 5.0 | 4.0 | 4.0 |
| $M1/M0 \times 100\%$ | 89 | 88 | 86 | 83 | 81 | 86 | 86 |
| Twist coefficient K | 1400 | 1600 | 2000 | 2400 | 2600 | 2200 | 2200 |
| Bead filler height BH (mm) | 35 | 35 | 35 | 35 | 35 | 25 | 35 |
| Rubber gauge G (mm) | 3 | 3 | 3 | 3 | 3 | 3 | 1 |
| Tire mass | 97 | 97 | 97 | 97 | 97 | 97 | 96 |
| Rolling resistance | 98 | 98 | 98 | 98 | 98 | 98 | 97 |
| Steering stability | 3.0+ | 3.5 | 3.0+ | 3.0 | 2.5 | 3.0 | 3.0 |
| Load durability | 99 | 100 | 100 | 102 | 103 | 105 | 102 |

As can be seen from Table 1 and Table 2, a reduction in weight was achieved for the tires of Examples 1 to 8, in contrast to Conventional Example as the reference, and both good load durability and good steering stability were also maintained. Furthermore, the rolling resistance was also favorable.

In contrast, although a reduction was achieved in weight of the tires of Comparative Examples 1 to 3 through the use of the PET cords as carcass cords in place of rayon cords, the steering stability and the load durability were reduced due to the effect of tire temperature rising. In addition, although the tire of Comparative Example 4 includes the composite cords as the carcass cords, the intermediate elongation and the dimensional stability index were greater and the ratio between the initial elastic modulus M0 and M1 was too small. Accordingly, the steering stability and the load durability were reduced as in Comparative Examples 1 to 3. Although the tire of Comparative Example 5 includes the composite cords as the carcass cords, the twisting coefficient K was too small, which resulted in a reduction in load durability. Although the tire of Comparative Example 6 includes the composite cords as the carcass cords, the twist coefficient K was too large, which resulted in a reduction in steering stability.

Reference Signs List

1 Tread portion
2 Sidewall portion
3 Bead portion
4 Carcass layer
5 Bead core
6 Bead filler

7 Belt layer
8 Belt reinforcing layer
20 Composite cord
21 Ply of polyethylene terephthalate fiber yarn
22 Ply of aromatic polyamide fiber yarn

**Claims**

1.  A pneumatic tire comprising:

    an annular tread portion (1) extending in a tire circumferential direction;
    a pair of sidewall portions (2) disposed on both sides of the tread portion (1); and
    a pair of bead portions (3) disposed inward of the sidewall portions (2) in the tire radial direction, and comprising
    a carcass layer (4) mounted between the pair of bead portions (3),
    the carcass layer (4) comprising, as carcass cords,
    a plurality of composite cords (20) that are made of a polyethylene terephthalate fiber yarn having a fineness of from 420 dtex to 1200 dtex and an aromatic polyamide fiber yarn having a fineness of from 520 dtex to 1200 dtex, **characterized in that**
    the plurality of composite cords (20) have
    a total fineness of from 940 dtex to 2400 dtex, and
    a twist coefficient K expressed by Equation (1) that falls within a range of from 1600 to 2400,
    the composite cords (20)
    having an intermediate elongation within a range of from 2.0% to 4.5% with a load of 2.0 cN,
    having a dimensional stability index of from 2.5% to 6.0% which is a sum of a dry heat shrinkage rate at 150°C and the intermediate elongation with the load of 2.0 cN, and
    having a ratio of an initial elastic modulus M1 at 100°C within a load range of from 0 N to 44 N with respect to an initial elastic modulus M0 at 25°C within a load range of from 0 N to 44 N, the ratio being within a range of from 76% to 94%;

    $$K = T\sqrt{D} \quad (1),$$

    where

    T: cable twist count (twists/10 cm), and
    D: cord total fineness (dtex);

    wherein the intermediate elongation with a load of 2.0 cN is the elongation ratio (%) of a sample cord measured where a tensile test is performed, compliant with the "Testing Methods for Chemical Fiber Tire Cords" of JIS-L1017, under conditions of a grip spacing of 250 mm and a test speed of $300 \pm 20$ mm/minutes with an application of load of 2.0 cN/dtex;
    wherein the dimensional stability index is the sum of the intermediate elongation with a load of 2.0 cN and the dry heat shrinkage rate at 150°C, where the dimensional stability is higher when the sum is smaller;
    wherein the dry heat shrinkage rate at 150°C is the dry heat shrinkage rate (%) of the sample cord measured under conditions that, compliant with the "Testing Methods for Chemical Fiber Tire Cords" of JIS-L1017, a sample length is set at 500 mm and heating condition is set at 150°C for 30 minutes; and
    wherein the initial elastic modulus M0 or M1 is the initial elastic modulus (cN/dtex) in a load range of from 0 N to 44 N where a tensile test is performed, compliant with the "Testing Methods for Chemical Fiber Tire Cords" of JIS-L1017, under the conditions of a grip spacing of 250 mm and a test speed of $300 \pm 20$ mm/minutes, where a reduction in elastic modulus due to tire temperature rising is smaller where the ratio of the initial elastic modulus M1 to the initial elastic modulus M0 is higher.

2.  The pneumatic tire according to claim 1, further comprising:

    a bead core (5) embedded in the pair of bead portions (3); and
    a bead filler (6) disposed on an outer circumference of the bead core (5), wherein

the bead filler (6) has a height less than or equal to 30 mm.

3. The pneumatic tire according to claim 1 or 2, wherein
a rubber gauge taken in a portion located further outward than the carcass cords at a tire maximum width position
falls within a range from 1.0 mm to 2.5 mm.

**Patentansprüche**

1. Luftreifen, umfassend:

einen ringförmigen Laufflächenabschnitt (1), der sich in einer Reifenumfangsrichtung erstreckt;
ein Paar von Seitenwandabschnitten (2), die auf beiden Seiten des Laufflächenabschnitts (1) angeordnet sind; und
ein Paar von Wulstabschnitten (3), die von den Seitenwandabschnitten (2) in Reifenradialrichtung nach innen angeordnet sind, und umfassend eine Karkassenschicht (4), die zwischen dem Paar von Wulstabschnitten (3) angebracht ist,
wobei die Karkassenschicht (4), als Karkassencordfäden,
eine Vielzahl von Verbundcordfäden (20), die aus einem Polyethylenterephthalatfasergarn mit einer Feinheit von 420 dtex bis 1200 dtex und einem aromatischen Polyamidfasergarn mit einer Feinheit von 520 dtex bis 1200 dtex hergestellt sind, umfasst, **dadurch gekennzeichnet, dass**
die Vielzahl von Verbundcordfäden (20)
eine Gesamtfeinheit von 940 dtex bis 2400 dtex und
einen durch Gleichung (1) ausgedrückten Verdrillungskoeffizienten K aufweisen, der in einen Bereich von 1600 bis 2400 fällt,
wobei die Verbundcordfäden (20)
bei einer Last von 2,0 cN eine mittlere Verlängerung innerhalb eines Bereichs von 2,0 % bis 4,5 % aufweisen,
einen Dimensionsstabilitätsindex von 2,5 % bis 6,0 % aufweisen, der eine Summe einer Trockenwärmeschrumpfrate bei 150 °C und der mittleren Verlängerung mit der Last von 2,0 cN ist, und
ein Verhältnis eines anfänglichen Elastizitätsmoduls M1 bei 100 °C innerhalb eines Lastbereichs von 0 N bis 44 N in Bezug auf einen anfänglichen Elastizitätsmodul M0 bei 25 °C innerhalb eines Lastbereichs von 0 N bis 44 N aufweisen, wobei das Verhältnis innerhalb eines Bereichs von 76 % bis 94 % liegt;

$$K = T\sqrt{D} \dots (1),$$

worin

T: Kabelverdrillungsanzahl (Verdrillungen/10 cm) und
D: Cordfadengesamtfeinheit (dtex);

wobei die mittlere Verlängerung mit einer Last von 2,0 cN das Verlängerungsverhältnis (%) eines Probencordfadens ist, der gemessen wird, wenn eine Zugprüfung gemäß den "Testverfahren für Chemiefaser-Reifen-Cordfäden" von JIS-L1017 unter Bedingungen eines Griffabstands von 250 mm und einer Prüfgeschwindigkeit von 300 ± 20 mm/Minuten bei einer Lastanwendung von 2,0 cN/dtex durchgeführt wird;
wobei der Dimensionsstabilitätsindex die Summe der mittleren Verlängerung mit einer Last von 2,0 cN und der Trockenwärmeschrumpfrate bei 150 °C ist, wobei die Dimensionsstabilität höher ist, wenn die Summe kleiner ist;
wobei die Trockenwärmeschrumpfrate bei 150 °C die Trockenwärmeschrumpfrate (%) des Probencordfadens ist, gemessen unter Bedingungen, dass, gemäß den "Prüfverfahren für Chemiefaser-Reifen-Cordfäden" von JIS-L1017, eine Probenlänge auf 500 mm eingestellt wird und Erwärmungsbedingung auf 150 °C für 30 Minuten eingestellt wird; und wobei der anfängliche Elastizitätsmodul M0 oder M1 der anfängliche Elastizitätsmodul (cN/dtex) in einem Lastbereich von 0 N bis 44 N ist, wobei eine Zugprüfung gemäß den "Prüfverfahren für Chemiefaser-Reifen-Cordfäden" von JIS-L1017 unter den Bedingungen eines Griffabstands von 250 mm und einer Prüfgeschwindigkeit von 300 ± 20 mm/min durchgeführt wird, wobei eine Verringerung des Elastizitätsmoduls aufgrund von ansteigender Reifentemperatur kleiner ist, wenn das Verhältnis des anfänglichen Elastizitätsmoduls M1 zum anfänglichen Elastizitätsmodul M0 höher ist.

2. Luftreifen nach Anspruch 1, ferner umfassend:

   einen Wulstkern (5), der in das Paar von Wulstabschnitten (3) eingebettet ist; und
   einen Wulstfüller (6), der an einem Außenumfang des Wulstkerns (5) angeordnet ist, wobei
   der Wulstfüller (6) eine Höhe geringer als oder gleich 30 mm aufweist.

3. Luftreifen gemäß Anspruch 1 oder 2, wobei
   eine Kautschukdicke, genommen in einem Abschnitt, der an einer Reifenmaximalbreitenposition weiter außen als
   die Karkassencordfäden angeordnet ist, in einen Bereich von 1,0 mm bis 2,5 mm fällt.

**Revendications**

1. Pneumatique comprenant :

   une partie de bande de roulement annulaire (1) s'étendant dans une direction circonférentielle de pneu ;
   une paire de parties de flanc (2) disposées de part et d'autre de la partie de bande de roulement (1) ; et
   une paire de parties de talon (3) disposées vers l'intérieur des parties de flanc (2) dans la direction radiale de
   pneu, et comprenant une couche de carcasse (4) montée entre la paire de parties de talon (3),
   la couche de carcasse (4) comprenant, en tant que câbles de carcasse,
   une pluralité de câbles composites (20) qui sont constitués d'un fil de fibre en téréphtalate de polyéthylène
   ayant une finesse allant de 420 dtex à 1200 dtex et d'un fil de fibre en polyamide aromatique ayant une finesse
   allant de 520 dtex à 1200 dtex, **caractérisé en ce que** la pluralité de câbles composites (20) ont
   une finesse totale allant de 940 dtex à 2400 dtex, et
   un coefficient de torsion K exprimé par l'Équation (1) qui se situe dans une plage allant de 1600 à 2400,
   les câbles composites (20)
   ayant un allongement intermédiaire dans une plage allant de 2,0 % à 4,5 % avec une charge de 2,0 cN,
   ayant un indice de stabilité dimensionnelle allant de 2,5 % à 6,0 % qui est une somme d'un taux de retrait
   thermique à sec à 150 °C et de l'allongement intermédiaire avec la charge de 2,0 cN, et
   ayant un rapport d'un module élastique initial M1 à 100 °C dans une plage de charge allant de 0 N à 44 N par
   rapport à un module élastique initial M0 à 25 °C dans une plage de charge allant de 0 N à 44 N, le rapport étant
   dans une plage allant de 76 % à 94 % ;

$$K = T\sqrt{D}\ldots (1),$$

   où

   T : nombre des torsions de câble (torsions/10 cm), et
   D : finesse totale de câble (dtex);

   dans lequel l'allongement intermédiaire avec une charge de 2,0 cN est le rapport d'allongement (%) d'un câble
   échantillon mesuré où un essai de traction est mis en œuvre, conformément aux « Testing Methods for Chemical
   Fiber Tire Cords » de JIS-L1017, dans des conditions d'un espacement de pinces de 250 mm et d'une vitesse
   d'essai de 300 ± 20 mm/minutes avec une application de charge de 2,0 cN/dtex ;
   dans lequel l'indice de stabilité dimensionnelle est la somme de l'allongement intermédiaire avec une charge
   de 2,0 cN et du taux de retrait thermique à sec à 150 °C, où la stabilité dimensionnelle est plus élevée lorsque
   la somme est plus petite ;
   dans lequel le taux de retrait thermique à sec à 150 °C est le taux de retrait thermique à sec (%) du câble
   échantillon mesuré dans des conditions selon lesquelles, conformément aux « Testing Methods for Chemical
   Fiber Tire Cords » de JIS-L1017, une longueur d'échantillon est définie à 500 mm et
   une condition de chauffage est définie à 150 °C pendant 30 minutes ; et
   dans lequel le module élastique initial M0 ou M1 est le module élastique initial (cN/dtex) dans une plage de
   charge allant de 0 N à 44 N où un essai de traction est mis en œuvre, conformément aux « Testing Methods
   for Chemical Fiber Tire Cords » de JIS-L1017, dans les conditions d'un espacement de pinces de 250 mm et
   d'une vitesse d'essai de 300 ± 20 mm/minutes, où une réduction de module élastique en raison d'une augmentation de température de pneu est plus petite lorsque le rapport du module élastique initial M1 au module élastique initial M0 est plus élevé.

2. Pneumatique selon la revendication 1, comprenant en outre :

une tringle de talon (5) noyée dans la paire de parties de talon (3) ; et
un bourrage sur tringle (6) disposé sur une circonférence externe de la tringle de talon (5), dans lequel
le bourrage sur tringle (6) a une hauteur inférieure ou égale à 30 mm.

3. Pneumatique selon la revendication 1 ou 2, dans lequel
une épaisseur de caoutchouc prise dans une partie située davantage vers l'extérieur que les câbles de carcasse à
une position de largeur maximale de pneu se situe dans une plage allant de 1,0 mm à 2,5 mm.

# FIG. 1

# FIG. 2

**EP 3 552 841 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200963913 A
- JP 2012030737 A
- WO 2014057082 A1